# EUROPEAN PATENT SPECIFICATION

(11) **EP 0 503 870 B1**
(45) Date of publication and mention of the grant of the patent: **14.06.1995**
(21) Application number: 92301980.6
(22) Date of filing: 09.03.1992
(51) Int. Cl.: G01C 21/20

(54) **Vehicular route guidance apparatus**
Fahrzeugroutenführungsgerät
Appareil de guidage routier pour véhicule

(30) Priority: 13.03.1991 JP 47962/91
(43) Date of publication of application: 16.09.1992
(73) Proprietor: PIONEER ELECTRONIC CORPORATION, Meguro-ku Tokyo 153 (JP)
(72) Inventor: Yamanaka, Kiyoshi, c/o Pioneer Electronic Corp., Kawagoe-shi, Saitama (JP); Araki, Morio, c/o Pioneer Electronic Corp., Kawagoe-shi, Saitama (JP)
(74) Representative: Brunner, Michael John

(56) References cited:
- DE-A- 3 319 207
- US-A- 4 312 577
- US-A- 4 774 672
- PATENT ABSTRACTS OF JAPAN vol. 13, no. 422 (P-933)(3770) 20 September 1989 & JP-A-1 155 208
- PATENT ABSTRACTS OF JAPAN vol. 12, no. 199 (P-714)(3046) 9 June 1988 & JP-A-63 003 214
- PATENT ABSTRACTS OF JAPAN vol. 11, no. 22 (P-538)(2469) 21 January 1987 & JP-A-61 196 117

## Description

The present invention relates to a vehicular navigation apparatus and, more specifically, to a route guidance apparatus for a vehicle.

There is known, from JP-A-62-32600, a route guidance apparatus which receives in advance coordinate data of a start position, a destination, and at least one arbitrary position on a route (hereinafter referred to as 'route position') from the start position to the destination, and which displays an indication of a direction to go along at a present position. However, in such an apparatus, unless a vehicle reaches one designated route position, it is not guided to the next route position. Therefore, even if it is intended to go to the next route position while skipping one route position, guidance indication toward the one position is continued.

US-A-4774672 discloses a vehicular route guidance apparatus with position detection and position inputs.

An object of the invention is to provide a vehicular route guidance apparatus which can perform, in a proper manner, guidance indication to be followed at a present position.

According to the invention, there is provided, a vehicular route guidance apparatus comprising:
means for detecting the present position of a vehicle; and
means for receiving data indicating a start position, a destination, and at least one route position located on a route from the start position to the destination;
characterised by
means for judging whether the vehicle is located in any one of a number of circles having as their respective diameter a line segment connecting adjacent ones of the start position, route positions and the destination; and,
means for displaying an indication to guide the vehicle to the route position on a destination side of the circle in which the vehicle has been judged to exist, so that the vehicle can be guided to the destination even if a route position is missed.

In the drawings:-
Fig. 1 is a block diagram of a vehicular navigation apparatus to which a route guidance apparatus according to an embodiment of the invention is applied;
Fig. 2 is a flowchart of a route setting routine;
Figs. 3 and 4 show a flowchart of a guidance indication routine; and
Fig. 5 shows an example of a guidance indicating operation for a vehicle.

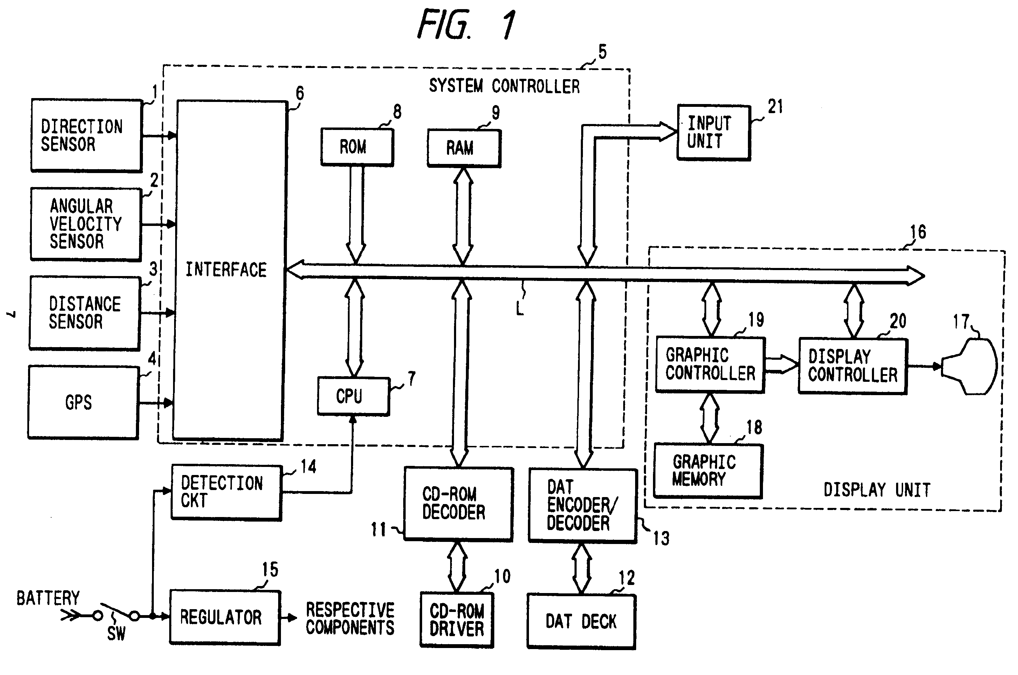

Fig. 1 is a block diagram showing an example of a vehicular navigation apparatus to which a route guidance apparatus of the invention is applied. A direction sensor 1 detects a running direction of a vehicle, an angular velocity sensor 2 detects an angular velocity of the vehicle, and a distance sensor 3 detects a running distance of the vehicle. A GPS (global positioning system) device 4 detects an absolute position of the vehicle based on transmitted longitude and latitude information etc. Detection outputs from these devices (sensors) 1-4 are provided to a system controller 5. The direction sensor 1 is, for instance, a geomagnetism sensor which detects the running direction of the vehicle based on geomagnetism. The distance sensor 3 is a known pulse generator which generates a pulse every predetermined rotation of a drive shaft of the vehicle by detecting a rotational angle of the drive shaft magnetically or optically.

The system controller 5 has the following components. An interface 6 receives the detection outputs from the devices (sensors) 1-4, and performs A/D conversion and other processing on the received signals. A CPU 7 performs various kinds of image data processing and computation of the running distance, running direction, coordinates (longitude and latitude) of a present position of the vehicle, etc. based on the output data sent from the devices (sensors) 1-4 via the interface 6. Programs of various kinds of processing performed by the CPU 7 and other necessary information are written in a ROM 8 in advance. Information necessary for executing a program is written in and read from a RAM 9.

A read-only nonvolatile memory medium, e.g., a CD-ROM, and a writable and readable nonvolatile memory medium, e.g., a DAT (digital audio tape) are used as external memory media. Other nonvolatile memory media such as an IC card may also be used as external memory media.

Map data, which has been prepared by digitizing (converting into numerals) respective points of roads on maps, are stored in the CD-ROM in advance. A CD-ROM driver 10 reads information stored in the CD-ROM. A reading output from the CD-ROM driver 10 is decoded by a CD-ROM decoder 11 and sent out to a bus line L.

The DAT is used as a backup memory. Information is written in and read from it by a DAT deck 12. When the navigation apparatus is disconnected from a vehicle battery, information such as coordinates of a vehicle present position which is stored in the RAM 9 immediately before the disconnection is sent to the DAT deck 12 via a DAT encoder/decoder 13 so as to be stored into the DAT as backup data. And when the navigation apparatus is re-connected to the battery, the backup data stored in the DAT is read out by the DAT deck 12, and the readout data is sent out to the bus line L via the DAT encoder/decoder 13 so as to be stored into the RAM 9.

The connection and disconnection to the vehicle battery is detected by monitoring an output level of a vehicle accessory switch SW by a detection circuit 14. A power from the battery (not shown) is introduced via the accessory switch SW, regulated by a regulator 15, and supplied to the respective components of the navigation apparatus. The output voltage of the regulator 15 does not fall abruptly from opening of the accessory switch SW due to its time constant. The backup data is written into the DAT during this fall period of the output voltage.

While the vehicle is running, the CPU 7 calculates the vehicle running direction based on, e.g., the output data of the direction sensor 1 every predetermined period in response to a timer interruption, and also calculates the longitude and latitude data (i.e., coordinate data of a vehicle present position) based on, e.g., the running distance and direction in response to an interruption which occurs every predetermined running distance based on the output data of the distance sensor 3. Further, the CPU 7 reads, from the CD-ROM, data of a map of an area including the present position coordinates, and temporarily stores that data in the RAM 9 as a buffer memory and then provides the same to a display unit 16.

The display unit 16 consists of the following components. A display 17 is, for instance, a CRT. A graphic memory 18 is, for instance, a V-RAM (video RAM). A graphic controller 19 stores (draws), as image data, the map data from the system controller 5 into the graphic memory 18, and also outputs this image data. A display controller 20 performs a control operation to display the map on the display 17 based on the image data from the graphic controller 19.

An input unit 21 is, for instance, a keyboard, and provides various instructions etc. to the system controller 5 in response to key manipulation by a user.

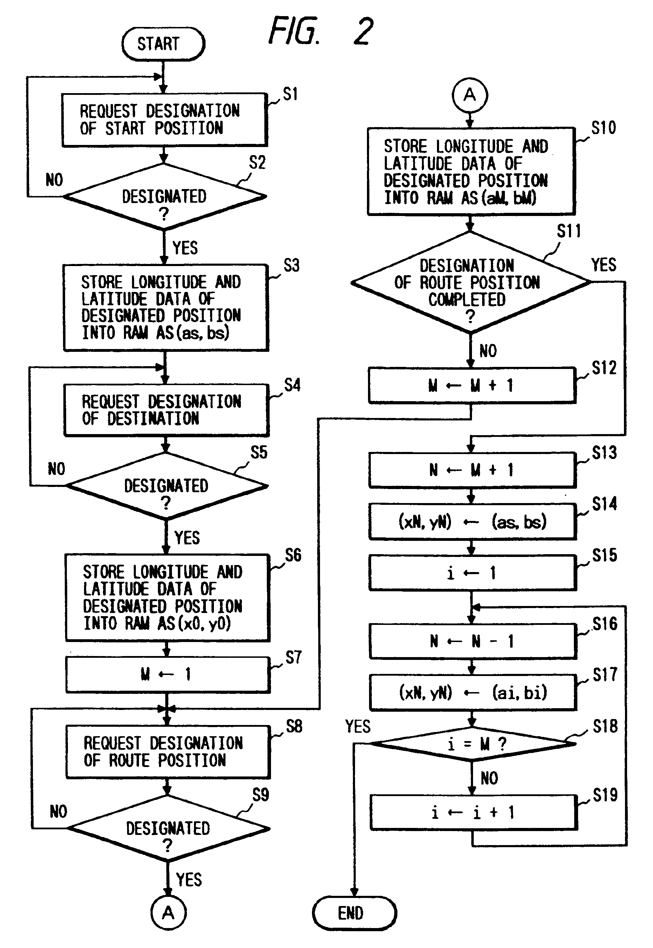

In the following, a procedure of vehicle guidance indication performed by the CPU 7 is described in terms of a route setting routine and a guidance indication routine which are shown in flowcharts of Figs. 2-4. It is assumed here that the route setting routine is called and executed upon its selection by a user's key manipulation of the input unit 21 during execution of a main routine (not shown) which includes the process of, recognizing a vehicle present position based on, e.g., the respective outputs of the sensors 1 and 3, reading out from the CD-ROM data of a map of an area including the present position to display the map on the display 17, and the process of indicating the vehicle present position on the map. It is noted that the operation of recognizing the present position is continued even after the route setting routine is called. The guidance indication routine is executed when a start position, route positions and a destination have been set by executing the route setting routine, and the guidance indication has been instructed by a user's key manipulation.

In the route setting routine shown in Fig. 2, in step S1 the CPU 7 first requests designation of a start position. This is done, for instance, by displaying a map on the display 17 and further displaying, together with the map, a message of requesting designation of a start position on the map using a cursor by key manipulation of the input unit 21. In step S2, it is judged whether a start position has been designated. If the judgment is affirmative, in step S3 the CPU 7 obtains longitude and latitude data of the designated position from the map data, and stores the same into the RAM 9 as data (as, bs). After execution of step S3, the CPU 7 requests designation of a destination in step S4. This is done, for instance, by displaying a map on the display 17 and further displaying, together with the map, a message of requesting designation of a destination on the map using a cursor by key manipulation of the input unit 21. In step S5, it is judged whether a destination has been designated. If the judgment is affirmative, in step S6 the CPU 7 obtains longitude and latitude data of the designated position from the map data, and stores the same into the RAM 9 as data (x0, y0). Then, the CPU 7 sets a variable "M" at "1" in step S7, and requests designation of a route position in step S8. This is done, for instance, by displaying a map on the display 17 and further displaying, together with the map, a message of requesting designation of a route position (in the order from the start position side) on the map using a cursor by key manipulation of the input unit 21. In step S9, it is judged whether a route position has been designated. If the judgment is affirmative, in step S10, the CPU 7 obtains longitude and latitude data of the designated position from the map data, and stores the same into the RAM 9 as data (aM, bM). Then, in step S11, it is judged whether the designation of the route positions has been completed. The completion of designating the route positions is instructed by key manipulation of the input unit 21. If the judgment is negative, "1" is added to the variable M in step S12, and the process returns to step S8 to repeat the same operation. If the judgment is affirmative, on the other hand, the CPU 7 substitute a value "M + 1" into a variable N in step S13, and reads out the longitude and latitude data (as, bs) of the start position from the RAM 9 and again stores that data into the RAM 9 as data (xN, yN) in step S14. Then, the CPU 7 sets a variable i at "1" in step S15, subtracts "1" from the variable N in step S16, and reads out the longitude and latitude data (ai, bi) of the route position from the RAM 9 and again stores that data into the RAM 9 as longitude and latitude data (xN, yN) of a route position TN in step S17. After execution of step S17, it is judged whether the variable i is equal to the variable M in step S18. If i is not equal to M, the variable i is increased by "1" in step S19, and the process returns to step S16. On the other hand, if i is equal to M, the route setting routine is finished because the longitude and latitude data of all the designated route positions have been stored in the RAM 9 with the order of T1, T2, T3 .... going upstream from the destination T0 toward the start position.

Although in the above route setting routine, the longitude and latitude data of the respective positions are obtained from the map data stored in the CD-ROM, the longitude and latitude data may be input by a user's key manipulation. Further, in connection with steps S2, S5 and S9 in which it is judged whether a position has been designated, the following step may be added. That is, if a position has not be designated, it may be judged whether previous inputs should be changed, and such change may be effected upon request.

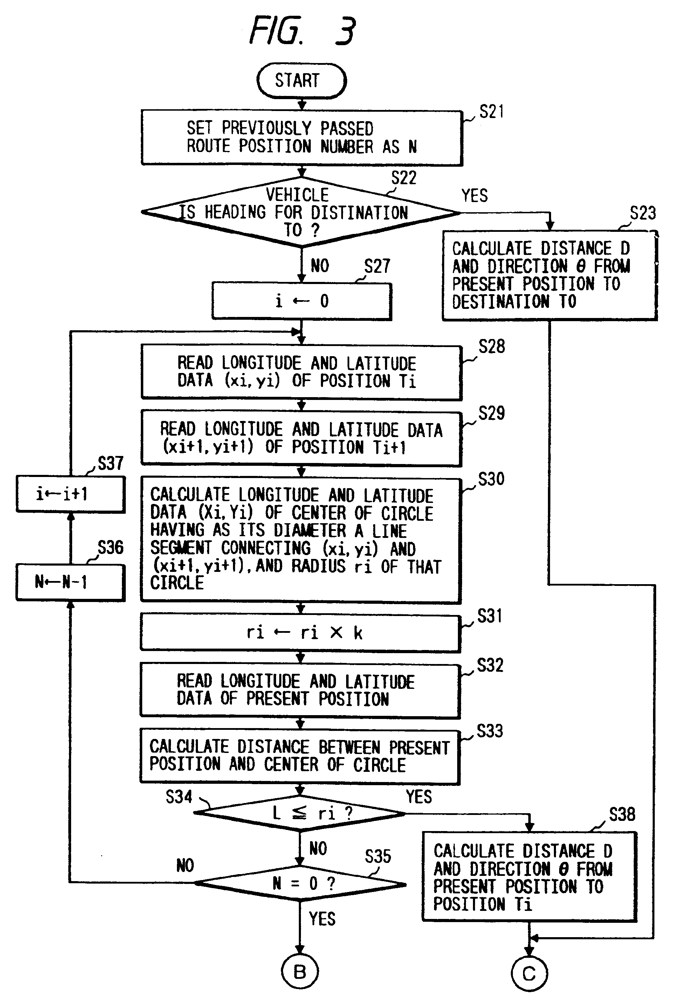

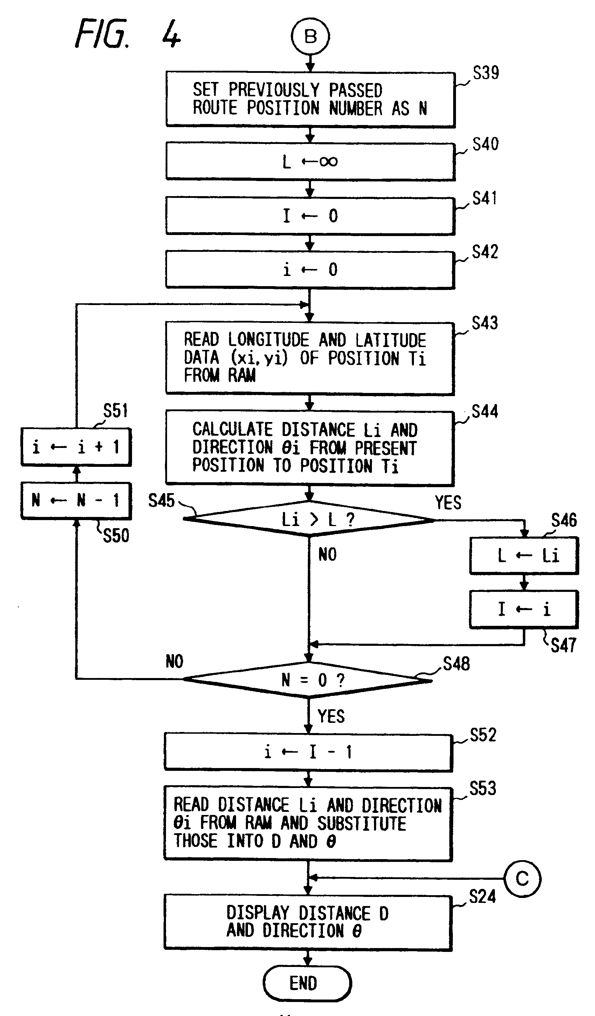

Turning now to the guidance indication routine as shown in Figs. 3 and 4, in step S21 the CPU 7 first sets a previously passed route position number as a variable N, i.e., sets a route position TN. At a time immediately after departure, a start position number is set as N, that is, the start position is set as TN. As described above, the route positions are defined with the order of T1, T2, T3, .... going upstream from the destination toward the start position. While the destination is defined as T0, the start position has the number equal to the maximum number m of the route positions plus one, that is, it is defined as Tm+1. After TN is set, it is judged whether the vehicle is directly heading for the destination T0 in step S22. If the judgment is affirmative, the previously passed route point TN should be T1. Therefore, it is judged in step S21 whether the route position set in step S21 is equal to T1. When the vehicle is heading for the destination T0, the CPU 7 calculates, in step S23, a distance D between the present position and the destination T0 and a direction ϑ from the present position toward the destination T0 based on the longitude and latitude data (a, b) and (x0, y0) of the present position and the destination, respectively, and displays the calculated distance D and direction ϑ on the display 17 in step S24. That is, the CPU 7 supplies the data indicating the distance D and direction ϑ to the graphic controller 19, and the graphic controller 19 superposes those data on the map data of the graphic memory 18 to produce image data and provides the image data to the display controller 20. As a result, the distance D and direction ϑ from the present position to the destination T0 are displayed on the display 17 together with the map. For example, the distance D is indicated simply as a certain value, and the direction ϑ is indicated on the map as a mark different from a mark representing the running direction of the vehicle.

On the other hand, when the vehicle is not directly heading for the destination T0, the CPU 7 sets a variable "i" at "0" in step S27, reads out the longitude and latitude data (xi, yi) of the position Ti from the RAM 9 in step S28, and further reads out the longitude and latitude data (xi+1, yi+1) of the position Ti+1 from the RAM 9 in step S29. Then, in step S30, the CPU 7 calculates longitude and latitude data (Xi, Yi) of the center of a circle having, as its diameter, a line segment connecting the longitude and latitude data (xi, yi) and (xi+1, yi+1), and also calculates a radius ri of that circle. In step S31, the CPU 7 further multiplies the radius ri by a coefficient "k" (e.g., 1.05), and makes the multiplication result a new radius ri. Then, the CPU 7 reads out the longitude and latitude data (a, b) of the vehicle present position, which is always detected and stored in the RAM 9, a register or other memory in step S32, and calculates a distance L between the present position and the center of the circle based on the longitude and latitude data (a, b) and (Xi, Yi) in step S33. In step S34, it is judged whether the distance L is smaller than or equal to the radius ri. If L > ri, which means that the vehicle present position is outside the circle having as its diameter the line segment connecting the longitude and latitude data (xi, yi) and (xi+1, yi+1), the CPU 7 judges in step S35 whether the variable N is equal to "0". If N ≠ 0, the CPU 7 subtracts one from the variable N in step S36, and adds one to the variable i in step S37. And the process returns to step S28 to repeat the above operation.

On the other hand, if L ≦ ri in step S34, which means that the vehicle present position is within the circle having as its diameter the line segment connecting the longitude and latitude data (xi, yi) and (xi+1, yi+1), the CPU 7 calculates, in step S38, a distance D and a direction ϑ from the present position to the position Ti based on the longitude and latitude data (a, b) and (xi, yi) of the detected present position and the position Ti, respectively, and displays the calculated distance D and direction ϑ on the display 17 in step S24.

If N = 0 in step S35, which means that the vehicle present position is not located in any circle having as its diameter a line segment connecting adjacent two route positions (which may include the start position) among the route positions downstream of the route position immediately upstream of the previously passed route position, the process goes to step S39 to set the previously passed route position number as N, that is, to set the route position (or start position) TN. Then, the CPU 7 sets the variable L at an infinite value in step S40, sets a variable I at "0" in step S41, and sets the variable i at "0" in step S42. Then, the CPU 7 reads out, in step S43, the longitude and latitude data (xi, yi) of the position Ti from the RAM 9, and in step S44 calculates a distance Li and a direction ϑi from the present position to the position Ti based on the longitude and latitude data (a, b) and (xi, yi) of the present position and position Ti, respectively and stores the calculated results into the RAM 9. Next, the CPU 7 judges in step S45 whether the calculated distance Li is smaller than the variable L. If Li < L, the CPU 7 substitutes Li into L in step S46, and substitutes I into i in step S47. Thereafter, the process goes to step S48. On the other hand, if Li ≧ L, the process directly goes to step S48, where it is judged whether the variable N is equal to "0". If N ≠ 0, the CPU 7 subtracts one from the variable N in step S50, and adds one to the variable i in step S51. Then, the.process returns to step S43 to repeat the above operation. If N = 0, the CPU 7 substitutes (I - 1) into the variable i in step S52, and reads out the data of the distance Li and direction ϑi from the RAM 9 and substitutes those into the distance D and direction ϑ, respectively in step S53. Finally, the process goes to step S24 to indicate the distance D and direction ϑ on the display 17.

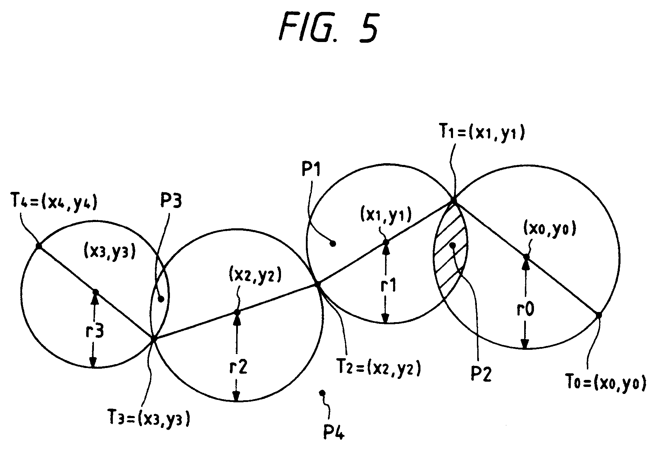

The above procedure is exemplified as follows. It is assumed as shown in Fig. 5 that three route positions T3, T2 and T1 are designated in this order from a start position T4 toward a destination T0. If T2 is a previously passed route position and a vehicle is presently located at P1, the present position P1 is located within a circle having as its diameter a line segment connecting longitude and latitude data (x1, y1) and (x2, y2) of the respective route positions T1 and T2. Therefore, guidance indication is performed so as to lead the vehicle to the route position T1. On the other hand, if T2 is a previously passed route position and the vehicle is presently located at P2, the present position P2 is located within the circle having as its diameter the line segment connecting the longitude and latitude data (x1, y1) and (x2, y2) of the respective route positions T1 and T2, as in the case of the position P1. However, the present position P2 is also located within a circle having as its diameter a line segment connecting the longitude and latitude data (x0, y0) and (x1, y1) of the destination T0 and the route position T1, respectively, as indicated by hatching in Fig. 5. In this case, guidance indication is performed so as to lead the vehicle to the destination T0. This is because approaching the destination T0 has a priority over approaching the route position T1, and therefore the above guidance is practical. Similarly, if the vehicle is presently located at P3, guidance indication is performed so as to lead the vehicle to the route position T2.

In the route exemplified in Fig. 5, if T3 is a previously passed route position and the vehicle is presently located at P4, the present position P4 is located outside any of the circles having as their diameter the line segment connecting the adjacent positions. In this case, distances L0-L4 between the present position and the respective positions T0-T4 are calculated, and a position producing the minimum distance is determined among the positions T0-T4. Although in this case it is determined to be the route position T2, if the vehicle is guided to reach the route position T2, it may be the case that the vehicle is forced to move upstream depending on the present position. Considering this problem, guidance indication is performed so as to lead the vehicle to the route position T1.

In the above-described embodiment, the destination is defined as T0, and the route positions are defined as T1, T2, T3, ...., in which the number increases as the position approaches the start position that is given the maximum number. Alternatively, the start position may be labeled T0, and the route positions may be labeled T1, T2, T3, .... toward the destination.

In the above embodiment, it is judged whether the present position is located within circles having as their diameter a line segment connecting adjacent positions on the side of the destination T0. Alternatively, it may be judged whether the present position is located within circles having as their diameter a line segment connecting adjacent positions on the side of the start position. In this case, since the present position is located within two circles as in the case of the position P2 of Fig. 5, it should always be judged whether the present position exists in two circles.

Further, in the above embodiment, it is assumed that a vehicle does not go upstream to the extent of passing the previously passed route position, and therefore the previously passed route position number is employed as the variable N in steps S21 and S39. However, to have the process include the case of returning to a position upstream of the already passed route position, it is not necessary to execute steps S21-23, but it is instead required to judge whether a vehicle presently exists in a circle having as its diameter a line segment connecting adjacent ones among all the route positions (start position and destination).

As described in the foregoing, in the route guidance apparatus according to the present invention, when it is judged that a vehicle is presently located in either one of circles having as their diameter a line segment connecting adjacent route positions (start position or destination), the vehicle is guided to the route position on the destination side or the destination on the circumference of the circle in which the vehicle exists. Therefore, in the case where a vehicle is intended to bypass one route position and head for the next route position, it can be avoided to perform guidance indication to lead the vehicle to the route position to be bypassed, that is, the vehicle can be guided to the next route position or destination. As a result, proper guidance indication can always be performed irrespective of the vehicle present position.

## Claims

1. A vehicular route guidance apparatus comprising: means (1-4) for detecting the present position of a vehicle; and
means (5) for receiving data indicating a start position, a destination, and at least one route position located on a route from the start position to the destination; characterised by
means (5) for judging whether the vehicle is located in any one of a number of circles having as their respective diameter a line segment connecting adjacent ones of the start position, route positions and the destination; and,
means (16) for displaying an indication to guide the vehicle to the route position on a destination side of the circle in which the vehicle has been judged to exist, so that the vehicle can be guided to the destination even if a route position is missed.

2. The apparatus of claim 1, further comprising means (5) for calculating a direction and a distance from the present position to the route position on the destination side or the destination associated with the circle in which the vehicle is judged to exist, wherein the displaying means further displays an indication of the calculated direction and distance.

3. The apparatus of claim 1 or claim 2, wherein, if the vehicle is located in two of the circles, the circle on the destination side is selected for subsequent processing by the display means (16).

4. The apparatus of claim 2, further comprising means (5) for calculating, when the judging means has found no circle in which the vehicle is located, distances between the present position and the respective route positions and destination, and for identifying the destination or a route position immediately downstream of a route position nearest to the present position; wherein the calculating means calculates a direction and a distance from the present position to the identified route position or destination.

5. The apparatus of claim 1, wherein the judging means performs its judgment on part of the circles which are associated with a previously passed route position or route positions downstream thereof.

## Patentansprüche

1. Eine Fahrzeugroutenführungsvorrichtung umfassend:
eine Einrichtung (1-4) zum Erfassen der gegenwärtigen Position eines Fahrzeugs; und
eine Einrichtung (5) zum Erhalten von Daten, die eine Startposition, einen Bestimmungsort und wenigstens eine Routenposition angeben, die sich auf einer Route von der Startposition zu dem Bestimmungsort befindet;
**gekennzeichnet durch**
eine Einrichtung (5) zum Beurteilen, ob sich das Fahrzeug in irgendeinem einer Anzahl von Kreisen befindet, die als ihren jeweiligen Durchmesser einen Geradenabschnitt haben, der benachbarte unter der Startposition, von Routenpositionen und dem Bestimmungsort verbindet, und
eine Einrichtung (16) zum Anzeigen einer Angabe, das Fahrzeug zu der Routenposition auf einer Bestimmungsortseite des Kreises zu führen, von dem beurteilt worden ist, daß sich das Fahrzeug in ihm befindet, so daß das Fahrzeug zu dem Bestimmungsort sogar geführt werden kann, wenn eine Routenposition ausgelassen wird.

2. Die Vorrichtung des Anspruchs 1, die ferner umfaßt eine Einrichtung (5) zum Berechnen einer Richtung und einer Entfernung von der gegenwärtigen Position zu der Routenposition auf der Bestimmungsortseite oder dem Bestimmungsort, der mit dem Kreis verbunden ist, von dem beurteilt worden ist, daß das Fahrzeug vorhanden ist, wobei die Anzeigeeinrichtung ferner eine Angabe der berechneten Richtung und der berechneten Entfernung anzeigt.

3. Die Vorrichtung des Anspruchs 1 oder des Anspruchs 2, in der, wenn sich das Fahrzeug in zwei der Kreise befindet, der Kreis auf der Bestimmungsortseite zur nachfolgenden Verarbeitung durch die Anzeigeeinrichtung (16) ausgewählt wird.

4. Die Vorrichtung des Anspruchs 2, die ferner eine Einrichtung (5) umfaßt, um, wenn die Beurteilungseinrichtung keinen Kreis gefunden hat, in dem sich das Fahrzeug berechnet, Entfernungen zwischen der gegenwärtigen Position und den entsprechenden Routenpositionen und dem Bestimmungsort zu berechnen, und um den Bestimmungsort oder eine Routenposition unmittelbar stromabwärts einer Routenposition, die der gegenwärtigen Position am nahesten ist, zu identifizieren, wobei die Berechnungseinrichtung eine Richtung und eine Entfernung von der gegenwärtigen Position zu der identifizierten Routenposition oder dem Bestimmungsort berechnet.

5. Die Vorrichtung des Anspruchs 1, in der die Beurteilungseinrichtung ihre Beurteilung zum Teil mit Kreisen durchführt, die mit einer vorhergehend durchlaufenen Routenposition oder Routenpositionen stromabwärts davon verbunden sind.

## Revendications

1. Dispositif de guidage d'itinéraire d'un véhicule comportant :
des moyens (1-4) pour détecter la position présente d'un véhicule ; et
des moyens (5) pour recevoir des données indiquant une position de départ, une destination et au moins une position d'itinéraire située sur un itinéraire entre la position de départ et la destination ; caractérisé par
des moyens (7) pour évaluer si le véhicule est situé dans l'un quelconque d'une pluralité de cercles ayant pour diamètre respectif un segment de droite reliant des positions adjacentes parmi la position de départ, des positions d'itinéraire et la destination ; et
des moyens (16) pour visualiser une indication afin de guider le véhicule vers la position d'itinéraire sur un côté destination du cercle dans lequel le véhicule a été évalué se trouver, de sorte que le véhicule peut être guidé vers la destination même si une position d'itinéraire est sautée.

2. Dispositif selon la revendication 1, comportant en outre des moyens (7) pour calculer une direction et une distance à partir de la position présente vers la position d'itinéraire sur le côté destination ou la destination associée au cercle dans lequel le véhicule est évalué se trouver, dans lequel les moyens de visualisation affichent en outre une indication de la direction et de la distance calculées.

3. Dispositif selon la revendication 1 ou 2, dans lequel, si le véhicule se trouve dans deux des cercles, le cercle sur le côté destination est sélectionné pour un traitement ultérieur par les moyens de visualisation (16).

4. Dispositif selon la revendication 2, comportant en outre des moyens (5) pour calculer, lorsque les moyens d'évaluation n'ont trouvé aucun cercle dans lequel se trouve le véhicule, des distances entre la position présente et les positions d'itinéraire respectives et la destination, et pour identifier la destination ou une position d'itinéraire immédiatement en aval d'une position d'itinéraire la plus proche de la position présente ; dans lequel les moyens de calcul calculent une direction et une distance à partir de la position présente jusqu'à la position d'itinéraire ou la destination identifiées.

5. Dispositif selon la revendication 1, dans lequel les moyens d'évaluation effectuent leur évaluation sur une partie des cercles qui sont associés à une position d'itinéraire précédemment franchie ou de positions d'itinéraire en aval de celles-ci.
